# EUROPÄISCHE PATENTANMELDUNG

(11) **EP 2 050 415 A1**
(43) Veröffentlichungstag der Anmeldung: **22.04.2009**
(21) Anmeldenummer: 08018186.0
(22) Anmeldetag: 16.10.2008
(51) Int. Cl.: A61C 5/09, A61C 5/08

(54) **Konfektionierte Kaufläche**

(30) Priorität: 17.10.2007 DE 202007014550 U
(71) Anmelder: Weissenberger, Christian, 85354 Freising (DE)
(72) Erfinder: Weissenberger, Christian, 85354 Freising (DE)
(74) Vertreter: Winter, Brandl, Fürniss, Hübner Röss, Kaiser, Polte Partnerschaft Patent- und Rechtsanwaltskanzlei

(57) **Zusammenfassung**

Die vorliegende Erfindung betrifft vorkonfektionierte Teilkronen oder Facettenkronen oder Kauflächenkronen oder künstliche Kauflächen (Kronen) zur Restauration von geschädigten Molaren und Prämolaren, deren Verwendung, sowie einen Kit, enthaltend vorkonfektionierte Teilkronen in verschiedenen Größen, Farben und Dicken.

## Beschreibung

Die vorliegende Erfindung betrifft vorkonfektionierte Teilkronen oder Facettenkronen oder Kauflächenkronen oder künstliche Kauflächen (Kronen) zur Restauration von geschädigten Molaren und Prämolaren, gemäß Anspruch 1, deren Verwendung gemäß Anspruch 8 und einen Kit gemäß Anspruch 10.

Zähne und der Zahnhalteapparat können von unterschiedlichen Erkrankungen betroffen sein. Dazu gehören Probleme wie z.B. Mundgeruch, Zahnfleischentzündungen oder Karies. Ein Großteil der europäischen Bevölkerung wird im Laufe des Lebens von Karies betroffen, was durch die sehr kohlehydratreiche Nahrung begünstigt wird und in der Folge enorme Kosten für das Gesundheitssystem verursacht.

Bei Karies wird die Zahnhartsubstanz durch eine Kombination chemischer Prozesse und der Einwirkung von Bakterien zerstört. Dieser Prozess vollzieht sich in mehreren Stufen und reicht von oberflächlichem Schmelzkaries bis hin zu vollständig zerstörten und abgestorbenen Zähnen. Bei oberflächlichem Schmelzkaries können die betroffenen Zahnoberflächen bei entsprechender Behandlung wieder regenerieren. Sind hingegen Löcher, so genannte Kavitäten entstanden, müssen diese entweder mit einem plastischen Füllmaterial oder mit einem Inlay und/oder Onlay versorgt werden. Größere Defekte werden mit einer Vollkrone oder Teilkrone ausgeglichen. Ein Inlay ist eine nach einem Abdruck hergestellte Füllung, die genau in die Kavität eingepasst wird. Ein individuell angepasstes Onlay ersetzt defekte, geschwächte Zahnwände und greift dabei über die Höcker des Zahns. Bei den Defekten muss es sich nicht zwangsläufig um Karies handeln, so kommen auch beispielsweise durch einen Unfall geschädigte Zähne für eine derartige Behandlung in Frage.

Die Herstellung der individuellen Inlays, Onlays, Teilkronen und Kronen erfordert zahlreiche zeitaufwendige und kostspielige Arbeitschritte. Die Anfertigung kann nicht von einem Zahnarzt alleine bewerkstelligt werden und somit ist eine gute Koordination zwischen dem Zahnarzt und einem Zahntechniker erforderlich. Von einem vom Zahnarzt angefertigten Silikonabdruck fertigt der Zahntechniker ein Gipsmodell des Gebisses. Diese Modelle montiert der Zahnarzt in der Praxis in der exakten Zahn- und Kieferstellung, damit der Zahnersatz später genau passt. Die Modelle aus Hartgips sind die Arbeitsgrundlage, um die zu ersetzenden Zahnteile oder Zähne originalgetreu aus Wachs zu modellieren. Anhand der Wachsvorlagen werden dann in aufwendiger Handarbeit die entsprechenden Zahnersatzteile angefertigt. Dazu werden verschiedene Materialien wie Gold, Keramik oder Kunststoffe verwendet. Die fertigen Teile müssen schließlich vom Zahnarzt dauerhaft am Zahn befestigt werden. Somit sind für die Zahnrestauration nach den herkömmlichen Verfahren mindestens 2 bis 3 Sitzungen beim Zahnarzt und das Hinzuziehen eines Zahnlabors erforderlich.

Für die Anfertigung von individuellem Zahnersatz werden inzwischen auch computergesteuerte Fräsmaschinen eingesetzt. So wird beispielsweise ein konventionell hergestelltes Modell des zu ersetzenden Zahnteils abgetastet und zeitgleich aus einem Keramikblock geschliffen. Die Abformung kann auch mittels einer 3D-Messkamera direkt im Mund des Patienten erfolgen. Aus den erzeugten Bilddaten wird per Computer ein Restaurationsvorschlag generiert, der beliebig verändert und angepasst werden kann. Nach der Konstruktion des virtuellen Modells kann ebenfalls aus einem Keramikblock vollautomatisch das passende Zahnersatzteil geschliffen und sofort vom Zahnarzt eingepasst werden. Diese Verfahren beschleunigen zwar die Herstellung von individuellen Zahnersatzteilen, sie sind aber immer noch sehr kostspielig, was die Anschaffung der Geräte betrifft.

Mit Hilfe vorkonfektionierter Vollkronen werden in der pädiatrischen Zahnheilkunde häufig zerstörte Milchzähne zur Wiederherstellung ihrer Funktion restauriert. Dies liegt am hohen Zeitbedarf der konventionellen Verfahrensweise und der noch schwach ausgeprägten Kooperationsfähigkeit bei Kindern. Inzwischen haben sich auch Hersteller auf dem Markt etabliert, die Kunststoffvollkronen für beschädigte Zähne von Erwachsenen im Baukastensystem anbieten (www.calessco.de, Stand 21. September 2007). Dieses System restauriert den gesamten Zahn mit einer konfektionierten Krone. Dies hat den Nachteil, dass mehr gesunde Hartubstanz (buccal und palatinal) vom Zahn abgeschliffen werden muss und die Anpassungen im Randbereich auf Zahnfleischhöhe, oder unter dem Zahnfleisch sehr schwierig sind. Allerdings dürfen nach einer Bekanntmachung des Ministeriums für Gesundheit und Soziale Sicherheit vom 8. Dezember 2004 (BAnz. Nr. 54, S. 4094) konfektionierte Vollkronen als dauerhafter Zahnersatz nur in der Kinderzahnheilkunde verwendet werden.

In dem Gebrauchsmuster DE 296 21 807 U1 konfektionierte Voll- und Teilkronen beschrieben, die unter Einbeziehen der Kau- und Mantelfächen die Zähne lediglich sektor- bis halbkreisförmig bedecken. Die Anschlussflächen zwischen Zahn und Kronen befinden sich auch auf der exponierten Kaufläche und sind durch die tägliche Beanspruchung besonders stark belastet, was die Haltbarkeit dieser Kronen beeinflussen könnte. Außerdem müssen die Voll- und Teilkronen gemäß diesem Stand der Technik aus einer Keramikplatte und einem Mantel zusammengesetzt werden, was die Komplexität des Restaurationsverfahrens erhöht. Bei der rechtwinkligen Anordnung von Keramikplatte und Mantel könnten außerdem leicht Spannungen auftreten, wodurch die Gefahr von Sprüngen und Schäden in den aus Keramik hergestellten Voll- und Teilkronen zunimmt.

Des Weiteren ist in der Patentanmeldung DE 10 2005 063 357 A1 ein okklusaler Schild beschrieben, der ein Okklusalrelief darstellt, dessen Unterseite passgenau die präparierte plane Kaufläche des Zahnes bedeckt und dessen Oberseite die Kaufläche des Zahnes nachbildet. Diese Okklusalschilde werden in einem direkten oder indirekten Verfahren auf der präparierten Kaufläche angebracht. Im direkten Verfahren wird ein vorgeformter Keramikblock auf der reduzierten Zahnkaufläche adhäsiv befestigt, wobei anschließend das Kauflächenrelief durch präparative Maßnahmen individuell hergestellt, bearbeitet und poliert werden muss. Im indirekten Verfahren werden über Negativabdrücke des jeweiligen behandelten Zahnes, seiner Nachbarschafts- und antagonistischen Beziehungen Modelle hergestellt, auf denen die Modellation des Schildes vorgenommen wird, der anschließend auf der Kaufläche des Zahnes befestigt wird. Alternativ kann auch unter Verwendung einer CAD/CAM-Maschine der Schild erfasst werden, wobei jeder Schild für jeden Patienten einzeln nach CAD/CAM-Technik hergestellt und ebenfalls adhäsiv auf der Kaufläche des Zahnes befestigt wird. Bei dem in DE 10 2005 063 357 A1 beschriebenen Schild handelt es sich somit um ein individualisierte Teilkrone, die mittels der beschriebenen zeitaufwändigen und teuren Verfahren für jeden Patienten einzeln hergestellt werden muss.

Ausgehend vom Stand der Technik, ist es Aufgabe der vorliegenden Erfindung eine einfache und kostengünstige Restauration von geschädigten Molaren und Prämolaren zur Verfügung zu stellen.

Die Lösung dieser Aufgabe erfolgt durch die Merkmale der Patentansprüche 1, 8, 10 und 13.

Ein Kunststoffmodell gemäß Anspruch 9 löst die Aufgabe ebenfalls.

Die vorliegende Erfindung betrifft insbesondere eine Krone zur Kauflächenrestauration von geschädigten Backenzähnen (Molaren und/oder Prämolaren), wobei die Krone eine vollständig modellierte Kaufläche aufweist, die sich über eine gesamte Querschnittsfläche eines zu restaurierenden vorpräparierten Zahns erstreckt, die Krone eine im Wesentlichen ebene oder gewinkelte Rückseite aufweist, die zur Fixierung der Krone auf der Querschnittsfläche des Zahns dient und die Krone als vorkonfektioniertes Teil vorliegt. Im Gegensatz zu den Teilkronen, die im Stand der Technik offenbart sind, liegt die Krone bereits als vollständig vorkonfektioniertes Teil vor, wodurch eine aufwändige individualisierte Anfertigung und/oder Anpassung entfällt. Vorkonfektionierte Teilkronen sind serienmäßig angefertigte Kronen mit patientenunabhängigen, vordefinierten Maßen und Farbschattierungen, wobei sich überraschenderweise herausgestellt hat, dass auch vorkonfektionierte bzw. serienmäßig hergestellte Kronen sich zur Zahnrestauration bzw. Zahnstabilisierung eignen.

Vor dem Anbringen der Krone wird der untere Teil des geschädigten Zahnes mit Komposit aufgebaut. Dies hat den Vorteil, dass man den Zahn nicht so stark beschleifen muss (minimalinvasive Therapie), außerdem ist eine genauere Anpassung des plastischen Komposits im cervikalen oder appproximalen Bereichs möglich.

Die vorliegende Erfindung hat den Vorteil, dass eine vollständige Restauration während einer einzigen Sitzung durchgeführt werden kann. Dies ist angenehmer für die betroffenen Patienten und ist gleichzeitig viel kostengünstiger und zeitsparender als die herkömmlichen Verfahren.

Für die Zwecke der vorliegenden Erfindung werden die Begriffe vorkonfektionierte Teilkrone oder Facettenkrone oder Kauflächenkrone oder künstliche Kaufläche unter dem Begriff "Krone" zusammengefasst.

Es ist bevorzugt, dass die Krone aus keramischem Material, insbesondere ätzbaren Silikatkeramiken, Lithiumsilikatkeramiken oder Oxidkeramiken oder Kunststoffmaterial, insbesondere Kompositkunststoffmaterial auf Acrylatbasis mit Füllstoffen, insbesondere mit Glasfüllstoffen, aufgebaut ist.

Vollkeramische Einlagefüllungen, Veneers, Kronen und Brücken erfreuen sich wegen der ausgezeichneten Ästhetik und Körperverträglichkeit zunehmender Beliebtheit. Es wird zwischen Silikatglaskeramiken, Oxidkeramiken und glasinfilitrierten Oxidkeramiken unterschieden (K.H. Kunzelmann, M. Kern, P. Pospiech, A. Mehl, R. Frankenberger, B. Reiss, K. Wiedhahn, Vollkeramik auf einen Blick, 2. Auflage, 2006, Herausgeber im Eigenverlag: Arbeitsgemeinschaft für Keramik in der Zahnheilkunde e.V.). Für die hier beschriebenen vorkonfektionierten Kronen werden Silikatkeramiken, Lithiumsilikatkeramiken oder Oxidkeramiken bevorzugt.

Da Silikatkeramiken eine geringere Biegefestigkeit besitzen (unter 350 MPa) müssen die Kronen ausschließlich geklebt werden (adhäsive Befestigung), wozu sie vorher angeätzt werden. Ein Vorteil der adhäsiven Befestigung ist, dass durch den kraftschlüssigen Verbund eine Stabilisierung des Restzahns erreicht wird, sofern eine Klebung im Schmelz erfolgen kann. Hochfeste Keramiken, z.B. Oxidkeramiken mit mehr als 350 MPa Biegefestigkeit hingegen, können sowohl konventionell mit Glasionomerzement oder Zinkoxid-Phosphatzement zementiert werden, als auch adhäsiv befestigt werden.

Eine Alternative zur Keramik stellen Kunststoffmaterialien dar. Kunststoffkronen bestehen inzwischen in der Regel aus Komposit, einer Methylacrylatmatrix, die mit anorganischen Füllstoffen unterschiedlicher Größe, z.B. Glas, Keramik, Aluminiumsilikat oder Bariumkristallen versetzt ist, um die mechanischen und physikalischen Eigenschaften zu verbessern. Es ist bevorzugt dass die Kronen aus gehärtetem Kunststoffmaterial, insbesondere Kompositkunststoffmaterial sind, die an den vorpräparierten Zahnquerschnittsflächen ebenfalls adhäsiv befestigt werden können.

Es ist bevorzugt, dass die geschädigten Molaren und Prämolaren vor dem Fixieren der Krone so vorpräpariert werden, dass sie eine im Wesentlichen ebene oder gewinkelte Querschnittsfläche aufweisen. Damit vorkonfektionierte, sprich wenig individualisierte Kronen zur Zahnrestauration eingesetzt werden können, muss es die Möglichkeit geben, Ausgangsbedingungen zu schaffen, um möglichst unabhängig von den Zahnvorschäden, die Kronen schell und einfach fixieren zu können. In einer bevorzugten Ausführungsform dieser Erfindung ist dies möglich, indem der geschädigte Zahn mit einer im Wesentlichen ebenen Querschnittsfläche vorpräpariert wird, wozu eine Krone mit einer ebenfalls im Wesentlichen eben geformten Rückseite passt.

In einer weiteren bevorzugten Ausführungsform dieser Erfindung wird die Querschnittsfläche des Restzahns gewinkelt präpariert, so dass sie zwei Flächen im Winkel von ca. 105°-180° aufweist, wobei die beiden Flächen sich im Bereich der zentralen Fissur schneiden. Eine gewinkelte Querschnittsfläche ergibt sich aus der natürlichen Form der Molaren und Prämolaren, deren Höcker auf der palatinalen und bukkalen Seite ein bis zwei Millimeter höher sind als die zentrale Fissur und dem Wunsch möglichst viel Zahnsubstanz zu erhalten. Eine derartig gewinkelt präparierte Zahnquerschnittsfläche ist dann komplementär zu der Rückseite einer gewinkelten Krone.

Die Erzeugung der im Wesentlichen ebenen oder gewinkelten Querschnittsfläche im geschädigten Zahn erfolgt in der Regel durch die Vorabfüllung von Kavitäten mit plastisch formbarer Kompositmasse. Dies hat gleichzeitig den Vorteil, dass dadurch bereits eine Teilrestauration der geschädigten Molaren und Prämolaren stattfindet. Falls notwendig, kann die Erzeugung der im Wesentlichen ebenen oder gewinkelten Querschnittsfläche durch Herausschleifen oder Ausfräsen von etwas Zahnmaterial vervollständigt werden. Die Vorpräparation kann sich von vornherein nur auf Herausschleifen oder Ausfräsen beschränken, z.B. bei einem teilweise abgebrochenen Zahn.

Plastische Kompositmassen sind als Füllungsmaterialien, bestehend aus der oben beschriebenen organischen Kunststoffmatrix, in die anorganische Füllkörper eingebettet sind, wohlbekannt und seit mittlerweile zwei Jahrzehnten in der Zahnmedizin im Einsatz. Für die Vorabrestauration der Kavitäten kann deshalb schnell und einfach nach bereits etablierten Verfahren vorgegangen werden. Dies beinhaltet eine Kavitätenpräparation nach den Regeln der Adhäsivtechnik mit nachfolgendem schichtweisen Einbringen der Kompositmasse und Aushärten mit blauem Licht. Tiefe Kavitäten können mit Zementunterfüllungen (Glasionomerzement, Zinkoxid-Phosphatzement) abgedeckt werden, bei flachen Kavitäten ist dies nicht notwendig. Die Kontaktpunkte zu den Nachbarzähnen werden ebenfalls mit Kompositmasse aufgebaut.

Trotz vieler hervorragender Eigenschaften der Kompositmasse ist ihr Einsatz oft auf kleinere Seitenzahnfüllungen und Restaurationen im Frontzahnbereich beschränkt. Ist bei größeren Schäden zu wenig Restzahnsubstanz vorhanden, z.B. fehlen Zahnwände oder einer oder mehrere/sämtliche Höcker so sind oft Inlays, Onlays oder Kronen notwendig. Diese können individuell angefertigt oder erfindungsgemäß vorkonfektioniert sein.

Kompositmasse bietet trotzdem noch den Vorteil, auch zur Zementierung bzw. Befestigung von Keramik- oder Kunststoffrestaurationen verwendet werden zu können. Somit ist es möglich, nach vollendeter Auffüllung der Kavitäten und Präparation einer im Wesentlichen ebenen oder gewinkelten Zahnquerschnittsfläche die Kronen in dieser Erfindung dauerhaft an den beschädigten Molaren und Prämolaren mit Hilfe von Kompositmasse zu befestigen.

Es ist vorteilhaft, ausgehend von den individuellen Bedürfnissen, jedem Patienten eine möglichst passende Krone zur Verfügung zu stellen. Dabei müssen die von Patient zu Patient verschiedenen Zahngrößen, Farbschattierungen oder unterschiedlich geformten Kauflächen berücksichtigt werden. Außerdem sollte berücksichtigt werden, dass die Zahnschäden unterschiedlich schwer sein können, wozu die Kronen in verschiedenen Dicken vorliegen müssen. Es ist deshalb bevorzugt, dass die Krone in unterschiedlichen Größen für jeden zu restaurierenden Zahn zur Verfügung gestellt wird.

Es ist weiterhin bevorzugt, dass die Krone in unterschiedlichen Farben und/oder Opazitätstufen für jeden zu restaurierendem Zahn zur Verfügung gestellt wird.

Es ist weiterhin bevorzugt, dass die Krone mit unterschiedlich geformten Kauflächen, insbesondere Höckerreliefs, für jeden zu restaurierenden Zahn zur Verfügung gestellt wird.

Es ist ebenso bevorzugt, dass die Krone in verschiedenen Dicken für jeden zu restaurierenden Zahn zur Verfügung gestellt wird.

Des Weiteren ist eine Verwendung der erfindungsgemäßen vorkonfektionierten Krone zur Kauflächenrestauration von geschädigten Backenzähnen bevorzugt.

Abhängig vom Patienten können somit die Anforderungen was Farbe, Form der Kauffläche, insbesondere des Höckerreliefs, Dicke und Winkel der Rückseite betrifft, sehr unterschiedlich sein. Grundsätzlich bedeutet dies, dass der Zahnarzt stets eine sehr große Auswahl der verschiedensten Varianten einer Krone für jeden einzelnen Molaren und Prämolaren bereitstellen muss, was mit hohen Kosten verbunden ist. Dieses Problem kann umgangen werden, wenn ein Kit mit Kunststoffmodellen (oder Kunststoffdummys) der Krone angeboten wird, das alle in Frage kommenden Varianten und Kombinationen bezüglich Farbe, Form der Kaufläche, insbesondere des Höckerreliefs, Dicke und Winkel der Rückseite enthält. Nach einem Kompositaufbau kann der Zahnarzt beispielsweise zuerst anhand des Kunststoffmodellkits eine passende Krone aussuchen. Diese Kunststoffmodelle könnten nach einer entsprechenden Desinfektion erneut verwendet werden. Die Krone selbst kann kurzfristig bei einem Hersteller bestellt werden und anschließend dauerhaft am Zahn befestigt werden. Durch den Kompositaufbau ist der Zahn außerdem schon soweit stabilisiert, dass kein Provisorium während der Wartezeit benötigt wird.

Es ist deshalb bevorzugt, ein Kit mit Kunststoffmodellen der Krone für jeden zu restaurierenden Zahn zur Verfügung zu stellen, wobei die Kunststoffmodelle in unterschiedlichen Farben, mit unterschiedlich geformten Kauflächen und unterschiedlichen Dicken, sowie in wenigstens drei unterschiedlichen Größen vorliegen. Es ist ebenso bevorzugt, dass die Rückseite jedes Kunststoffmodells entlang der zentralen Fissur gewinkelt ist, wobei die Winkel unterschiedlich groß und den Winkeln der vorpräparierten Molaren und Prämolaren komplementär sind.

Es ist bevorzugt, dass die vorkonfektionierten Kronen für jeden zu restaurierendem Zahn, in unterschiedlichen Größen, unterschiedlichen Farben, mit unterschiedlich geformten Kauflächen und unterschiedlichen Dicken als Kit vorliegen und es ist bevorzugt, dass im Kit jede Krone in wenigstens drei unterschiedlichen Größen enthalten ist. Es ist ebenso bevorzugt, dass Kronen Teil des Kits sind, deren Rückseite entlang der zentralen Fissur gewinkelt ist. Die Winkel sind unterschiedlich groß und sind somit den Winkeln der vorpräparierten Zahnoberfläche der Molaren und Prämolaren komplementär.

Nach der beschriebenen Vorpräparation des geschädigten Zahns kann die Krone mit der passenden Größe, Farbe und Oberflächenstruktur und Dicke direkt am Patienten ausgewählt werden und nach bereits etablierten Verfahren fixiert werden. Die Vorbereitung der Krone für die Befestigung am vorrestaurierten Zahn beinhaltet in der Regel Ätzen mit HF, was der Vergrößerung der Klebefläche dient, gefolgt von Silanisieren, wodurch eine zusätzliche chemische Verbindung hergestellt wird und Auftragen einer dünnen Schicht Klebstoffs z.B. eines Bondingmaterials, die später gemeinsam mit dem Befestigungskomposit polymerisiert.

Eine Vorbereitung der Krone kann entfallen, wenn eine bereits vorbehandelte Krone verwendet wird. Die Krone wäre analog zu beispielsweise den keramischen Brackets (3MEspe, Clarity), die in der Kieferorthopädie zur Anwendung kommen, vorbehandelt und müsste somit nur noch aufgeklebt werden.

Eine Vorbereitung des Zahns ist ebenfalls notwendig, wobei noch zugänglicher Schmelz und Dentin getrennt vorbehandelt werden müssen. Dies beinhaltet Reinigen mit Pulverstrahl, Ätzen mit Phosphorsäure (mit unterschiedlichen Einwirkzeiten für Schmelz und Dentin), sowie das Auftragen eines Vorbehandlungsmittels z.B. Primers und eines Klebstoffs. Anschließend kann der Befestigungskomposit aufgebracht werden, die Krone wird in Position gebracht und nach Entfernen der Kompositüberschüsse wird eine Photopolymerisation durchgeführt. Es kann auch ein dualhärtendes Komposit zum Zementieren verwendet werden. Hier startet die UV Lampe dem Polymerisationsprozeß nur. Die Restauration wird beendet mit einer Okklusionskontrolle und der finalen Korrektur und Ausarbeitung.

Weitere Vorteile und Merkmale der vorliegenden Erfindung ergeben sich aufgrund der Beschreibung von Ausführungsbeispielen sowie anhand der Zeichnung.

Es zeigt:
- Figur 1: einen Molaren des rechten Oberkiefers (Zahn 16) mit kariösem Defekt; a.) distal (von hinten); b.) mesial; (von vorne); c.) okklusal (von der Kaufläche); d.) palatinal (von innen); bukkal (von außen);
- Figur 2: einen Molaren des rechten Oberkiefers (Zahn 16) nach Kompositaufbau; a.) distal (von hinten); b.) mesial; (von vorne); c.) okklusal (von der Kaufläche); d.) palatinal (von innen); bukkal (von außen);
- Figur 3: einen Molaren des rechten Oberkiefers (Zahn 16) nach Präparation mit Positionierhilfen; a.) distal (von hinten); b.) mesial; (von vorne); c.) okklusal (von der Kaufläche); d.) palatinal (von innen); bukkal (von außen);
- Figur 4: einen Molaren des rechten Oberkiefers (Zahn 16) nach Restauration mit Krone und Klebefuge; a.) distal (von hinten); b.) mesial; (von vorne); c.) okklusal (von der Kaufläche); d.) palatinal (von innen); bukkal (von außen);
- Figur 5a: eine erfindungsgemäße Krone, die zu einem vorpräparierten Molaren passt, in Seitenansicht;
- Figur 5b: eine erfindungsgemäße Krone in Draufsicht;
- Figur 5c: eine weitgehend ebene Rückseite der Krone;
- Figur 6: einen Molaren des rechten Unterkiefers (Zahn 47) mit einer insuffizienten Füllung;
- Figur 7: den Molaren gemäß Figur 4 nach Entfernen der Amalgamfüllung und Sekundärkaries;
- Figur 8: den Molaren gemäß Figur 4 nach Präparation einer weitgehend ebenen Querschnittsfläche mit Komposit;
- Figur 9: den Molaren nach Anbringen der Krone.
- Figur 10: den Molaren nach Anbringen der Krone und finaler Ausarbeitung.

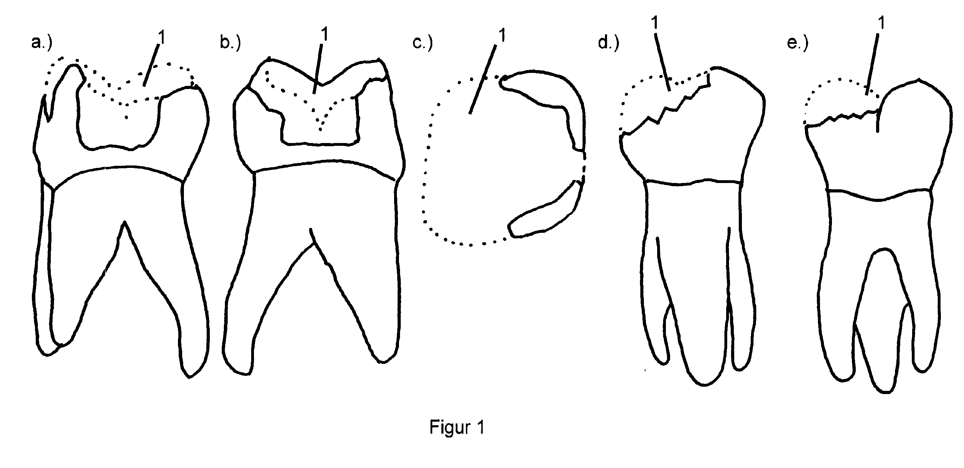

Figur 1 zeigt eine schematische Darstellung eines geschädigten Molaren des Oberkiefers aus verschiedenen Blickwinkeln. Die kariösen Defekte bzw. die fehlende Zahnsubstanz 1 sind mit gestrichelten Linien angedeutet.

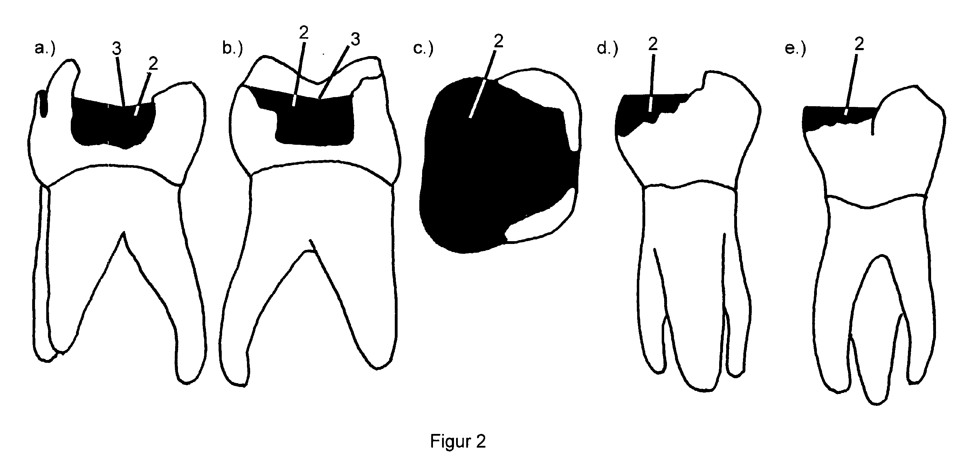

Figur 2 ist die schematische Darstellung des geschädigten Molaren aus Figur 1, nach der Durchführung des Kompositaufbaus 2. Im Kompositaufbau ist, von der distalen (Figur 2a) und mesialen (Figur 2b) Seite aus betrachtet, entlang der zentralen Fissur ein Winkel 3 zu erkennen.

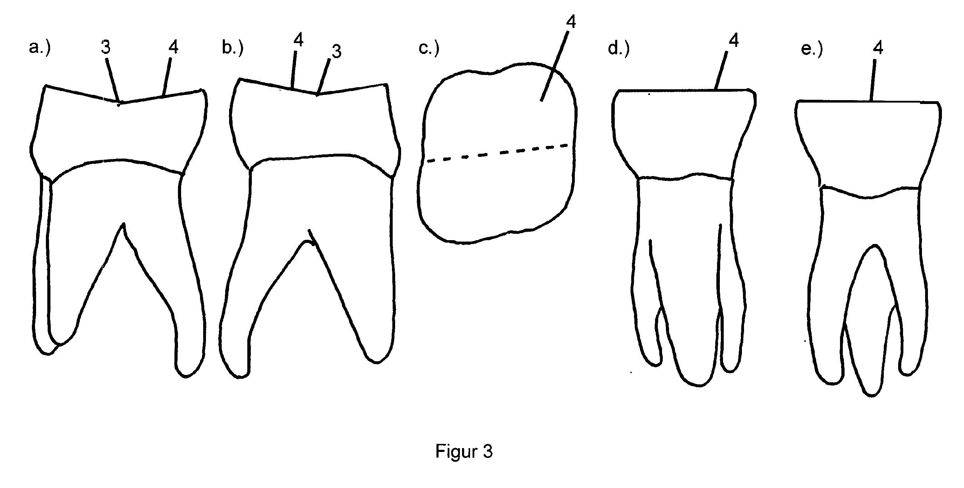

Figur 3 ist die schematische Darstellung des Molaren des Oberkiefers aus verschiedenen Blickwinkeln, wobei der Restzahn mit einer gewinkelt präparierten Oberfläche 4 gezeigt ist. Der Winkel 3 ist von der distalen (Figur 3a) und der mesialen (Figur 3b) Seite aus zu erkennen. Entsprechend dieser Darstellung ist für das Herstellen dieser Oberfläche, neben dem Einbringen von Komposit in die Kavität (gezeigt in Figur 2), das Abschleifen eines kleinen Teils der Restzahnsubstanz notwendig.

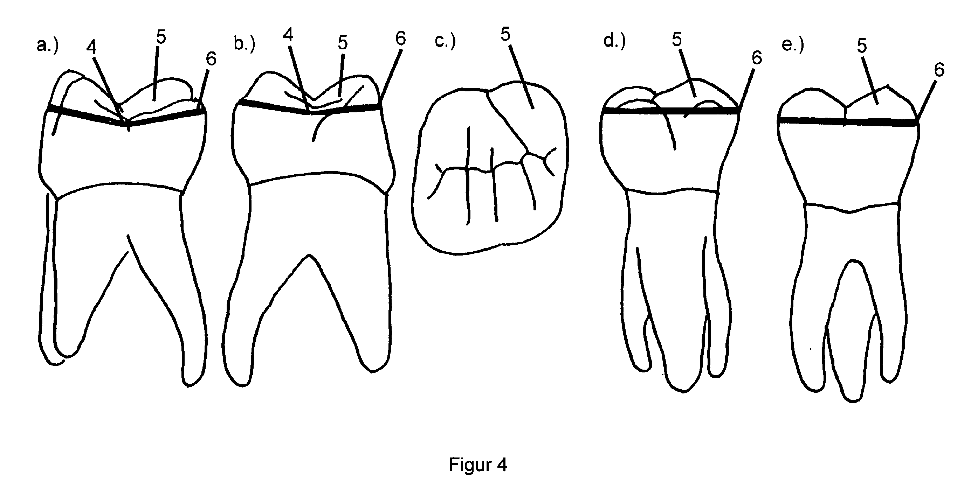

Figur 4 ist ebenfalls eine schematische Darstellung eines Molaren des Oberkiefers aus verschiedenen Blickwinkeln. Auf die gewinkelte Zahnoberfläche ist die erfindungsgemäße Krone 5 mit Komposit befestigt. Der Restspalt ist durch die Klebefuge 6 ausgeglichen. Der Winkel der Krone, erkennbar in der distalen (Figur 4a) und mesialen (Figur 4b) Ansicht, ist dem Winkel der Zahnoberfläche komplementär.

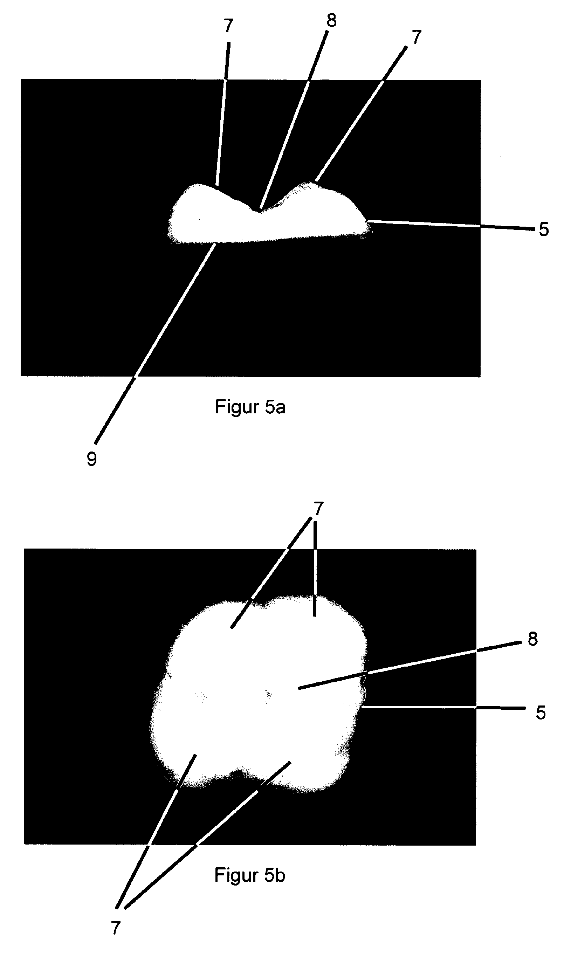

Figur 5a zeigt eine erfindungsgemäße vorkonfektionierte Krone 5 in Seitenansicht. Zu erkennen sind die Höcker 7 der Krone, die zentrale Fissur 8, sowie deren in diesem Fall weitgehend ebene Rückseite 9.

Figur 5b zeigt die Krone 5 in Draufsicht, wobei die vollständig modellierte Kaufläche mit sämtlichen Höckern 8 und der zentralen Fissur 8 zu sehen ist.

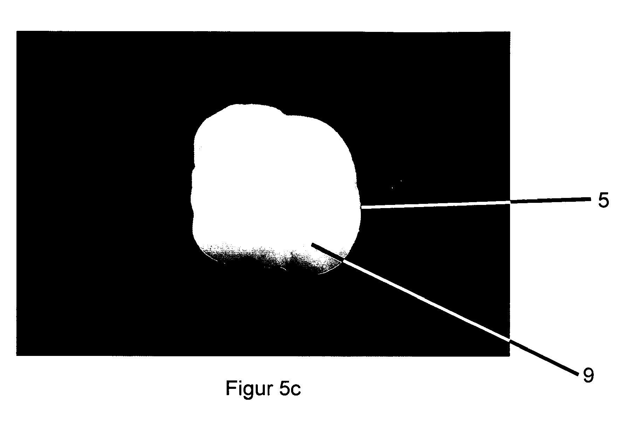

Die Figur 5c zeigt die im Wesentliche ebene Rückseite 9 der Krone 5.

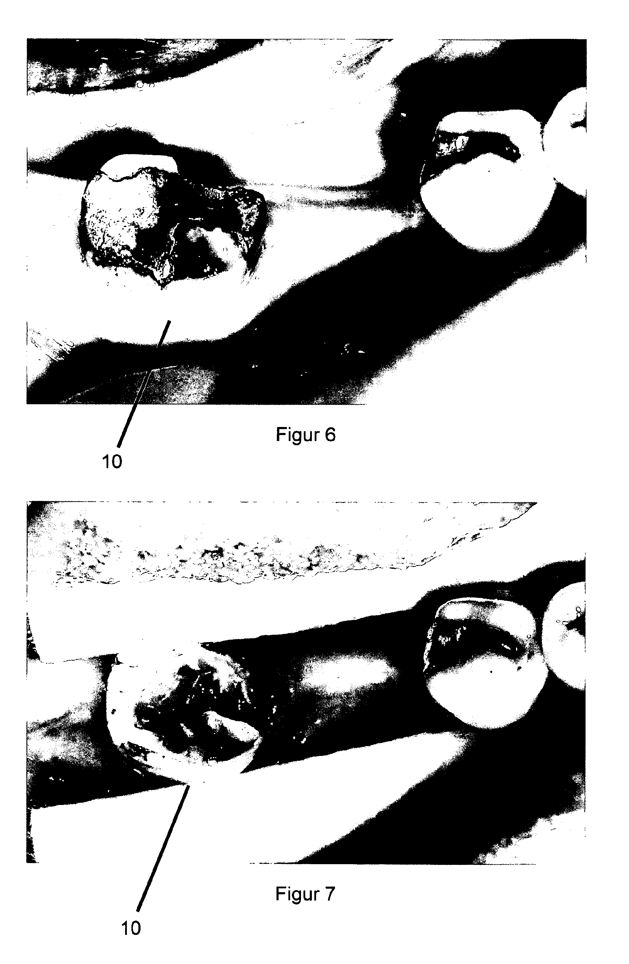

Die Figuren 6 bis 10 zeigen ein Anwendungsbeispiel *in situ* bei einem Patienten mit einem geschädigten Molaren 10 (Zahn 47). Die Figur 6 zeigt den Molaren 10, der mit einer insuffizienten Amalgamfüllung restauriert ist.

Die Figur 7 zeigt den Molaren 10 nach Entfernen der alten Amalgamfüllung, Entfernen von Sekundärkaries und gründlicher Reinigung.

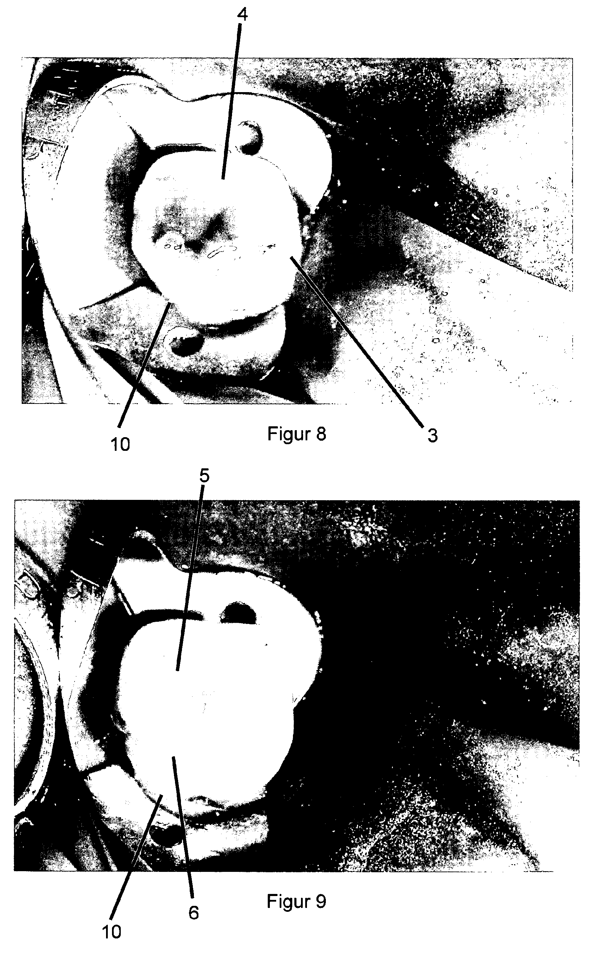

Die Figur 8 zeigt den Molaren 10 nach dem Kompositaufbau und Erzeugen der gewinkelten Querschnittsfläche 4. Zu erkennen ist der Winkel 3 entlang der Zentralfissur. Anschließend kann anhand der oben beschriebenen Verfahren die direkt am Patienten ausgewählte Krone 5 angebracht werden.

Figur 9 zeigt den auf diese Art vollständig restaurierten Prämolaren 10 mit einer bereits fixierten Krone.

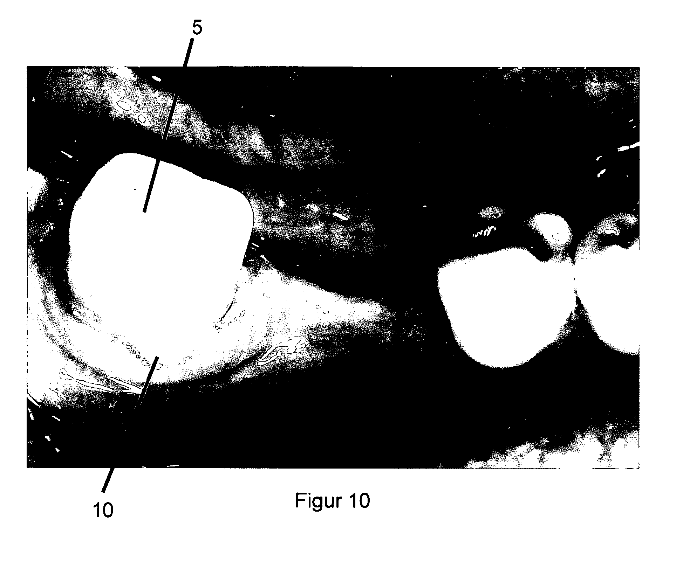

Figur 10 zeigt den auf diese Art vollständig restaurierten Prämolaren 10 nach dem Entfernen der überschüssigen Kompositmasse und der finalen Ausarbeitung.

Die vorliegende Erfindung hat somit zahlreiche Vorteile. Es kann direkt am Patienten die passende vorkonfektionierte Krone ausgewählt und nach der Vorpräparation der geschädigten Zähne adhäsiv befestigt werden. Die dauerhafte Versorgung der Molaren und Prämolaren kann in nur einer Sitzung erfolgen. Die Anfertigung eines Modells und einer Krone im Labor ist somit nicht mehr notwendig. Dadurch werden Kosten für die zahnmedizinische Versorgung deutlich gesenkt.

## Patentansprüche

1. Teilkrone oder Facettenkrone oder Kauflächenkrone oder künstliche Kaufläche (Krone) zur Kauflächenrestauration von geschädigten Backenzähnen (Molaren und/oder Prämolaren), wobei die Krone eine vollständig modellierte Kaufläche aufweist, die sich über eine gesamte Querschnittsfläche eines zu restaurierenden vorpräparierten Zahns erstreckt und die Krone eine im Wesentlichen ebene oder gewinkelte Rückseite aufweist, die zur Fixierung der Krone auf der Querschnittsfläche des Zahns dient,
**dadurch gekennzeichnet,**
**dass** die Krone als vollständig vorkonfektioniertes Teil vorliegt.

2. Krone nach Anspruch 1, **dadurch gekennzeichnet, dass** die Krone aus keramischem Materialien, insbesondere ätzbaren Silikatkeramiken, Lithiumsilikatkeramiken oder Oxidkeramiken oder Kunststoffmaterial, insbesondere Kompositkunststoffmaterial auf Acrylatbasis mit Füllstoffen, insbesondere mit Glasfüllstoffen, aufgebaut ist.

3. Krone nach einem der Ansprüche 1 bis 2, **dadurch gekennzeichnet, dass** die geschädigten Molaren und Prämolaren vor dem Fixieren der Krone so vorpräpariert werden, dass sie zwei Flächen im Winkel von ca. 105°-180° aufweisen, wobei die beiden Flächen sich im Bereich der zentralen Fissur schneiden und dass die Rückseite der Krone komplementär dazu verläuft.

4. Krone nach einem der Ansprüche 1 bis 3, **dadurch gekennzeichnet, dass** sie in unterschiedlichen Größen für jeden zu restaurierenden Zahn zur Verfügung gestellt wird.

5. Krone nach einem der Ansprüche 1 bis 4, **dadurch gekennzeichnet, dass** sie in unterschiedlichen Farben und/oder Opazitätstufen für jeden zu restaurierenden Zahn zur Verfügung gestellt wird.

6. Krone nach einem der Ansprüche 1 bis 5, **dadurch gekennzeichnet, dass** sie mit unterschiedlich geformten Kauflächen, insbesondere Höckerreliefs, für jeden zu restaurierenden Zahn zur Verfügung gestellt wird.

7. Krone nach einem der Ansprüche 1 bis 6, **dadurch gekennzeichnet, dass** sie in verschiedenen Dicken für jeden zu restaurierenden Zahn zur Verfügung gestellt wird.

8. Verwendung der Krone nach einem der Ansprüche 1 bis 7 zur Kauflächenrestauration von geschädigten Backenzähnen.

9. Kunstoffmodell der Krone gemäß den Ansprüchen 1 bis 7.

10. Kit enthaltend Kunststoffmodelle der Krone gemäß wenigstens einem der Ansprüche 1 bis 7 und 9 für jeden zu restaurierenden Zahn, in unterschiedlichen Farben, mit unterschiedlich geformten Kauflächen und unterschiedlichen Dicken.

11. Kit nach Anspruch 10, **dadurch gekennzeichnet, dass** jedes Kunststoffmodell der Krone in wenigstens drei unterschiedlichen Größen enthalten ist.

12. Kit nach Anspruch 10, **dadurch gekennzeichnet, dass** die Rückseite jedes Kunststoffmodells entlang der zentralen Fissur gewinkelt ist, wobei die Winkel unterschiedlich groß und den Winkeln der vorpräparierten Molaren und Prämolaren komplementär sind.

13. Kit, enthaltend Kronen gemäß wenigstens einem der Ansprüche 1 bis 7 für jeden zu restaurierenden Zahn, aus unterschiedlichen Materialien in unterschiedlichen Größen, unterschiedlichen Farben, mit unterschiedlich geformten Kauflächen und unterschiedlichen Dicken.

14. Kit nach Anspruch 13, **dadurch gekennzeichnet, dass** jede Krone in wenigstens drei unterschiedlichen Größen enthalten ist.

15. Kit nach Anspruch 13, **dadurch gekennzeichnet, dass** die Rückseite jeder enthaltenen Krone entlang der zentralen Fissur gewinkelt ist, wobei die Winkel unterschiedlich groß und den Winkeln der vorpräparierten Molaren und Prämolaren komplementär sind.
